# EUROPEAN PATENT APPLICATION

(11) **EP 4 502 665 A1**
(43) Date of publication of application: **05.02.2025**
(21) Application number: 23780681.5
(22) Date of filing: 29.03.2023
(51) Int. Cl.: G02B 1/14, G02B 5/23, G02C 7/10

(54) **MANUFACTURING METHOD FOR OPTICAL ARTICLE**

(30) Priority: 31.03.2022 JP 2022058880
(71) Applicant: HOYA LENS THAILAND LTD., Pathumthani 12130 (TH)
(72) Inventor: CHOI, Seongjib, Tokyo 160-8347 (JP)
(74) Representative: Kraus & Lederer PartGmbB
(86) International application number: PCT/JP2023/012772
(87) International publication number: WO 2023/190672

(57) **Abstract**

There is provided a method of producing an optical article including applying a polymerizable composition onto a substrate to form a coating layer; and emitting light from a light source that emits light in a wavelength range ranging from ultraviolet light to visible light to the coating layer to cure the coating layer, wherein the polymerizable composition includes one or more polymerizable compounds having a molecular weight of 500 or less, a photopolymerization initiator having adsorption in at least a part of a visible light wavelength range, and a ultraviolet absorbing compound, wherein, during the light emission, for at least a certain period from the start of the light emission, the light emission is performed after a ultraviolet blocking filter is disposed between the light source and the coating layer.

## Description

### [Technical Field]

The present invention relates to a method of producing an optical article.

### [Background Art]

Many optical articles have one or more coating layers on a substrate and the coating layers impart various properties to the optical articles. In recent years, it has become common to form such coating layers as cured layers cured by photopolymerization (for example, refer to PTL 1).

### [Citation List]

### [Patent Literature]

[PTL 1] Japanese Patent Application Publication No. 2006-181455

### [Summary of Invention]

### [Technical Problem]

Compared to coating layer formation methods such as thermosetting, penetration/evaporation drying, and oxidation polymerization, formation of a coating layer (cured layer) by photopolymerization has advantages such as reducing an environmental load by reducing the amount of volatile organic compounds used, and improving productivity by shortening the curing time. However, as a result of studies performed by the inventors, it can be clearly understood that, in an optical article in which a cured layer is formed by photopolymerization, defects may occur on the surface of the cured layer, which results in a decrease in the transparency of the optical article.

In view of the above, an object of one aspect of the present invention is to provide a method of producing an optical article, which is a novel production method through which it is possible to produce an optical article having a cured layer formed by photopolymerization and excellent transparency.

### [Solution to Problem]

One aspect of the present invention provides a method of producing an optical article, including:
applying a polymerizable composition onto a substrate to form a coating layer; and
emitting light from a light source that emits light in a wavelength range ranging from ultraviolet light to visible light to the coating layer to cure the coating layer,
wherein the polymerizable composition includes
one or more polymerizable compounds having a molecular weight of 500 or less,
a photopolymerization initiator having adsorption in at least a part of a visible light wavelength range, and
a ultraviolet absorbing compound,
wherein, during the light emission, for at least a certain period from the start of light emission, the light emission is performed after a ultraviolet blocking filter is disposed between the light source and the coating layer.

The inventors conducted further studies and newly found that the defects on the surface of the cured layer described above are likely to occur in the cured layer formed by photopolymerizing a polymerizable composition containing a ultraviolet absorbing compound and a polymerizable compound having a molecular weight of 500 or less. In this regard, the inventors speculate as follows.

When light is emitted to the coating layer formed by applying the polymerizable composition onto the substrate, the coating layer can be cured by photopolymerization to form a cured layer.

On the other hand, they speculate that, when a ultraviolet absorbing compound adsorbs ultraviolet light, molecular motion occurs, which makes molecules more likely to aggregate. When the polymerizable composition contains a ultraviolet absorbing compound, the occurrence of aggregation of molecules in the initial stage of polymerization inhibits polymerization of the polymerizable compound, particularly, a low-molecular-weight polymerizable compound having a molecular weight of 500 or less is considered to be easily affected by the above polymerization inhibition. The inventors speculate that this may be a factor causing defects on the surface of the cured layer.

On the other hand, in the production method, a light source that emits light in a wavelength range ranging from ultraviolet light to visible light and a photopolymerization initiator having adsorption in at least a part of a visible light wavelength range are used, and then, for at least a certain period from the start of light emission for photopolymerization, that is, at least in the initial stage of polymerization, emission of ultraviolet light to the coating layer of the polymerizable composition is blocked by a ultraviolet blocking filter. Thereby, it is possible to prevent adsorption of ultraviolet light by the ultraviolet absorbing compound in the initial stage of polymerization. However, the coating layer contains a photopolymerization initiator that can function upon receiving light in a wavelength range longer than that of ultraviolet light contained in light emitted from the light source. Therefore, the photopolymerization initiator can cause the polymerization reaction of the polymerizable compound to progress when ultraviolet light emission is blocked. Therefore, in the initial stage of polymerization in which ultraviolet light is blocked by the filter, the influence of aggregation of ultraviolet absorbing compound molecules can be eliminated or reduced, and the polymerization of low-molecular-weight polymerizable compounds having a molecular weight of 500 or less can smoothly progress. Thus, the inventors speculate that the occurrence of defects on the surface of the cured layer can be restricted, which is the reason why an optical article having excellent transparency can be produced by the production method. However, the present invention is not limited to the speculation described in this specification.

### [Advantageous Effects of Invention]

According to one aspect of the present invention, it is possible to provide a method of producing an optical article through which it is possible to produce an optical article having a cured layer formed by photopolymerization and excellent transparency.

### [Brief Description of Drawings]

[Fig. 1]

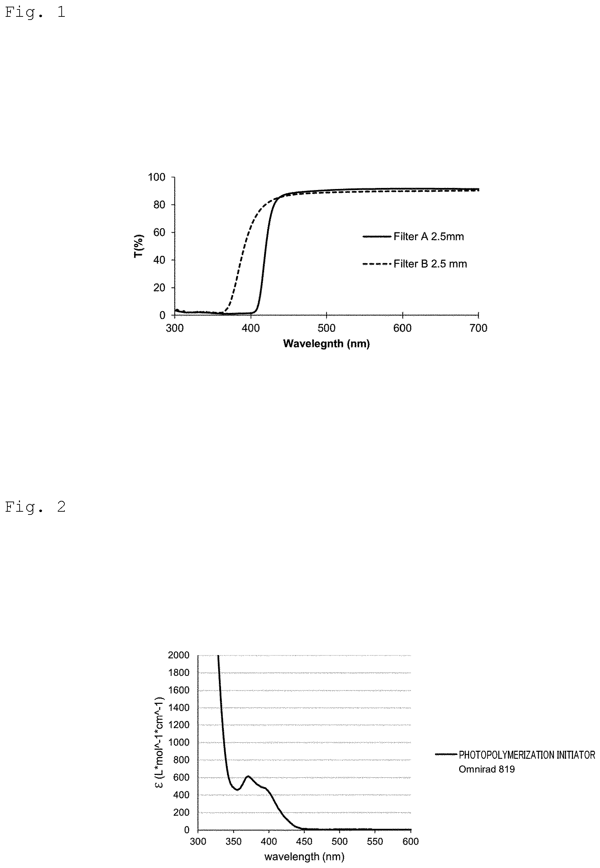

   Fig. 1 shows a transmission spectrum of a filter A used in an example and a transmission spectrum of a filter B used in a comparative example.
[Fig. 2]
   Fig. 2 shows an absorption spectrum of a photoradical polymerization initiator (Omnirad 819, commercially available from IGM Resin B. V.).
[Fig. 3]

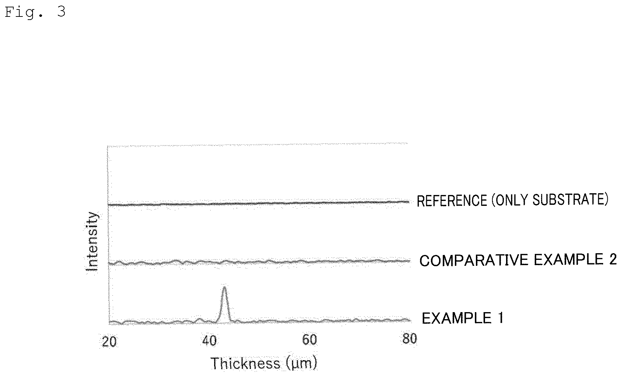

   Fig. 3 shows the results of measuring film thicknesses of photochromic layers of a spectacle lens produced in Example 1 and a spectacle lens produced in Comparative Example 2 with a reflective non-contact type film thickness measurement device.

### [Description of Embodiments]

In the present invention and this specification, "ultraviolet light" refers to electromagnetic waves in a wavelength range of 300 nm or more and 400 nm or less, and "visible light" refers to electromagnetic waves in a wavelength range of more than 400 nm and 780 nm or less.

In the present invention and this specification, "ultraviolet absorbing compound" refers to a compound having adsorption at a wavelength of at least 400 nm.

In the present invention and this specification, "ultraviolet blocking filter" refers to a filter that has a light transmittance of less than 5% in a ultraviolet wavelength range (300 nm or more and 400 nm or less) for the filter. That is, the filter has a maximum transmittance of less than 5% in a ultraviolet wavelength range (300 nm or more and 400 nm or less).

In the present invention and this specification, "photopolymerization initiator having adsorption in at least a part of a visible light wavelength range" refers to a compound that can function as a photopolymerization initiator, and a compound having adsorption in a visible light wavelength range, that is, in a at least a part of a wavelength range of more than 400 nm and 780 nm or less.

In the present invention and this specification, "having adsorption" means that the molar extinction coefficient is more than 0 L·mol⁻¹·cm⁻¹ at a target wavelength or in a target wavelength range. The molar extinction coefficient is a coefficient obtained by converting to the absorbance of a sample when the concentration of the sample is 1 mol/L and a cell with an optical path length of 1 cm is used, and can be determined by a known method.

In the present invention and this specification, "light source that emits light in a wavelength range ranging from ultraviolet light to visible light" refers to a light source having a light emission wavelength range in at least a part of a ultraviolet wavelength range and at least a part of a visible light wavelength range.

Hereinafter, the production method will be described in more detail.

### <Substrate>

In the production method, a polymerizable composition is applied onto a substrate to form a coating layer. The substrate may be selected according to the type of the optical article. Optical articles include various articles such as a spectacle lens, a goggle lens, a visor (cap) part of a sun visor, and a shield member of a helmet. As an example of the substrate, a spectacle lens substrate may be a plastic lens substrate or a glass lens substrate. The glass lens substrate may be, for example, a lens substrate made of inorganic glass. The lens substrate is preferably a plastic lens substrate because it is light-weight, hard to break and easy to handle. Examples of plastic lens substrates include styrene resins such as (meth)acrylic resins, allyl carbonate resins such as a polycarbonate resin, allyl resin, and diethylene glycol bisallyl carbonate resin (CR-39), vinyl resins, polyester resins, polyether resins, urethane resins obtained by reacting an isocyanate compound and a hydroxy compound such as diethylene glycol, thiourethane resins obtained by reacting an isocyanate compound and a polythiol compound, and a cured product obtained by curing a curable composition containing a (thio)epoxy compound having one or more disulfide bonds in the molecule (generally referred to as a transparent resin). As the lens substrate, an undyed substrate (colorless lens) may be used or a dyed substrate (dyed lens) may be used. The refractive index of the lens substrate may be, for example, about 1.50 to 1.75. However, the refractive index of the lens substrate is not limited to the above range, and may be within the above range or may be above or below outside of the above range. In the present invention and this specification, the refractive index is a refractive index for light having a wavelength of 500 nm. In addition, the lens substrate may be a lens having an index (so-called prescription lens) or a lens having no index (so-called non-prescription lens).

The spectacle lens may include various lenses such as a single focus lens, a multifocal lens, and a progressive power lens. The type of the lens is determined by the surface shape of both sides of the lens substrate. In addition, the surface of the lens substrate may be a convex surface, a concave surface, or a flat surface. In a general lens substrate and spectacle lens, the object-side surface is a convex surface and the eyeball-side surface is a concave surface. However, the present invention is not limited thereto. When a spectacle lens is produced by the production method, the coating layer of the polymerizable composition can be formed on the side of the object side-surface and/or on the side of the eyeball side-surface of the lens substrate.

The coating layer of the polymerizable composition may be directly provided on the surface of the substrate or may be indirectly provided with one or more other layers formed on the substrate therebetween. Examples of other layers include a hard coat layer and a primer layer for improving adhesion between a cured layer formed by curing a polymerizable composition and a substrate. In addition, a substrate with a hard coat layer can be used as the substrate.

### [Formation of coating layer of polymerizable composition]

### <Coating method>

As a polymerizable composition coating method, known coating methods such as a spin coating method and a dip coating method can be used. In consideration of uniformity of coating, a spin coating method is preferable.

### <Polymerizable composition>

### (Polymerizable compound)

In the present invention and this specification, the "polymerizable composition" is a composition containing one or more polymerizable compounds. The "polymerizable compound" is a compound containing one or more polymerizable groups in one molecule. In the production method, a polymerizable composition containing at least one or more polymerizable compounds having a molecular weight of 500 or less is used as polymerizable compounds. In the present invention and this specification, for the molecular weight of the polymer, a theoretical molecular weight calculated from the structural formula determined by structural analysis of the compound or the material preparation ratio during production is used. Specific examples of polymerizable compounds having a molecular weight of 500 or less include (meth)acrylates. In the present invention and this specification, "(meth)acrylate" refers to both an acrylate and a methacrylate. An "acrylate" is a compound having one or more acryloyl groups in one molecule. A "methacrylate" is a compound having one or more methacryloyl groups in one molecule. The number of functional groups of the (meth)acrylate is the number of groups selected from the group consisting of acryloyl groups and methacryloyl groups contained in one molecule. In the present invention and this specification, a "methacrylate" contains only a methacryloyl group as a (meth)acryloyl group, and something that contains both an acryloyl group and a methacryloyl group as (meth)acryloyl groups is an acrylate. The acryloyl group may be contained in the form of an acryloyloxy group, and the methacryloyl group may be contained in the form of a methacryloyloxy group. The "(meth)acryloyl group" described below refers to both an acryloyl group and a methacryloyl group, and "(meth)acryloyloxy group" refers to both an acryloyloxy group and a methacryloyloxy group. In addition, unless otherwise specified, the groups described may have substituents or may be unsubstituted. If a group has a substituent, examples of substituents include an alkyl group (for example, an alkyl group having 1 to 6 carbon atoms), a hydroxy group, an alkoxy group (for example, an alkoxy group having 1 to 6 carbon atoms), a halogen atom (for example, a fluorine atom, a chlorine atom, and a bromine atom), a cyano group, an amino group, a nitro group, an acyl group, and a carboxyl group. In addition, for a group having a substituent, the "number of carbon atoms" is the number of carbon atoms of a part containing no substituents.

Specific examples of polymerizable compounds having a molecular weight of 500 or less include the following component B and component C. In addition, in one aspect, the polymerizable composition used to form the coating layer in the production method may contain only one or more polymerizable compounds having a molecular weight of 500 or less as polymerizable compounds. In another aspect, the polymerizable composition used to form the coating layer in the production method may contain one or more polymerizable compounds having a molecular weight of 500 or less and one or more polymerizable compounds having a molecular weight of more than 500 as polymerizable compounds. Specific examples of polymerizable compounds having a molecular weight of more than 500 include the following component A. Hereinafter, the polymerizable compound having a molecular weight of 500 or less will be called a "low-molecular-weight polymerizable compound" and the polymerizable compound having a molecular weight of more than 500 will be called a "high-molecular-weight polymerizable compound." When the polymerizable composition used to form the coating layer in the production method contains only a low-molecular-weight polymerizable compound as the polymerizable compound, the content of the low-molecular-weight polymerizable compound (a total content when the polymerizable composition contains two or more low-molecular-weight polymerizable compounds) based on a total amount of 100 mass% of the polymerizable compounds is 100 mass%. On the other hand, when the polymerizable composition used to form the coating layer in the production method contains a low-molecular-weight polymerizable compound and a high-molecular-weight polymerizable compound as polymerizable compounds, the content of the high-molecular-weight polymerizable compound (a total content when the polymerizable composition contains two or more high-molecular-weight polymerizable compounds) based on a total amount of 100 mass% of the polymerizable compounds may be 50 mass% or less, more than 50 mass%, or 60 mass% or more. In addition, the content of the high-molecular-weight polymerizable compound may be, for example, 90 mass% or less, 85 mass% or less, 80 mass% or less or 75 mass% or less. When the polymerizable composition used to form the coating layer in the production method contains a low-molecular-weight polymerizable compound and a high-molecular-weight polymerizable compound, the content of the low-molecular-weight polymerizable compound (a total content when the polymerizable composition contains two or more low-molecular-weight polymerizable compounds) based on a total amount of 100 mass% of the polymerizable compounds may be more than 50 mass%, 50 mass% or less, or 40 mass% or less and may be 5 mass% or more, 10 mass% or more, or 15 mass% or more.

### Component A

The component A is an acyclic (meth)acrylate having a molecular weight of more than 500. In the present invention and this specification, "acyclic" means that a component does not include a cyclic structure. On the other hand, "cyclic" means that a component includes a cyclic structure. The acyclic (meth)acrylate is a mono- or higher-functional (meth)acrylate that does not include a cyclic structure.

The component A may be a monofunctional or di- or higher functional (meth)acrylate, and is preferably a difunctional or trifunctional (meth)acrylate and more preferably a difunctional (meth)acrylate. Specific examples of the component A include polyalkylene glycol di(meth)acrylate. For example, the polyalkylene glycol di(meth)acrylate may be represented by the following Formula 2:

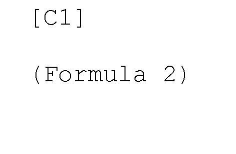

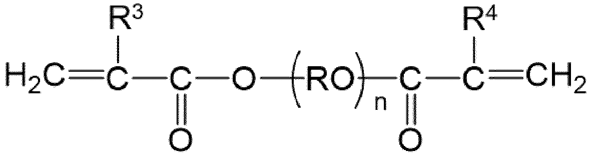

In Formula 2, R³ and R⁴ each independently represent a hydrogen atom or a methyl group, R represents an alkylene group, and n represents the number of repetitions of alkoxy groups represented by RO and is 2 or more. Examples of alkylene groups represented by R include an ethylene group, propylene group, and tetramethylene group. n is 2 or more, and may be, for example, 30 or less, 25 or less or 20 or less. Specific examples of polyalkylene glycol di(meth)acrylate include polyethylene glycol di(meth)acrylate, polypropylene glycol di(meth)acrylate, and polytetramethylene glycol di(meth)acrylate. The component A may contain, as a (meth)acryloyl group, only an acryloyl group, only a methacryloyl group, or an acryloyl group and a methacryloyl group.

The molecular weight of the component A may be more than 500, 510 or more, 520 or more, 550 or more, 570 or more, 600 or more, 630 or more or 650 or more. In order to increase the hardness of the cured layer, the molecular weight of the component A may be, for example, 2,000 or less, 1,500 or less, 1,200 or less, 1,000 or less, or 800 or less.

### Component B

The component B is a (meth)acrylate having a molecular weight of 500 or less and represented by the following Formula 1:
[C2]

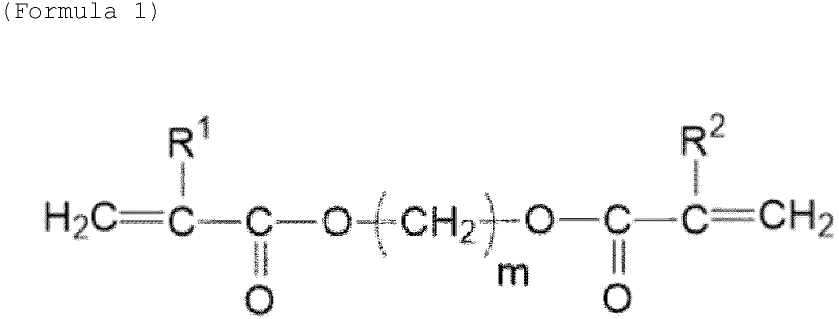

In Formula 1, R¹ and R² each independently represent a hydrogen atom or a methyl group, and m represents an integer of 1 or more. m may be 1 or more, and may be, for example, 10 or less, 9 or less, 8 or less, 7 or less or 6 or less.

The molecular weight of the component B is 500 or less, and may be 450 or less, 400 or less, 350 or less or 300 or less. In addition, the molecular weight of the component B may be, for example, 100 or more, 150 or more or 200 or more.

The component B may contain, as a (meth)acryloyl group, only an acryloyl group, only a methacryloyl group, or an acryloyl group and a methacryloyl group. Specific examples of the component B include 1,9-nonanediol di(meth)acrylate (also called "nonamethylene glycol di(meth)acrylate"), 1,6-hexanediol di(meth)acrylate, and 1,10-decanediol di(meth)acrylate.

### Component C

The component C is a tri- to pentafunctional (meth)acrylate having a molecular weight of 500 or less, preferably a trifunctional or tetrafunctional (meth)acrylate, and more preferably a trifunctional (meth)acrylate. Specific examples of the component C include pentaerythritol tri(meth)acrylate, pentaerythritol tetra(meth)acrylate, dipentaerythritol tetra(meth)acrylate, trimethylolethane tri(meth)acrylate, trimethylolpropane tri(meth)acrylate, ditrimethylolpropane tetra(meth)acrylate, tetramethylolmethane tetra(meth)acrylate, and tetramethylolmethane tri(meth)acrylate. The molecular weight of the component C is 500 or less, and can be, for example, in a range of 200 to 400, but the molecular weight is not limited to this range. The component C may contain, as a (meth)acryloyl group, only an acryloyl group, only a methacryloyl group, or an acryloyl group and a methacryloyl group.

The content of the polymerizable compound in the polymerizable composition based on a total amount of 100 mass% of the composition may be, for example, 80 mass% or more, 85 mass% or more or 90 mass% or more. In addition, the content of the polymerizable compound in the polymerizable composition based on a total amount of 100 mass% of the composition may be, for example, 99 mass% or less, 95 mass% or less, 90 mass% or less or 85 mass% or less. In the present invention and this specification, regarding the content, "total amount of the composition" is a total amount of all components excluding a solvent in the composition containing the solvent. The composition may or may not contain a solvent. When the composition contains a solvent, any solvent in an arbitrary amount can be used as a usable solvent as long as it does not inhibit progress of the polymerization reaction of the polymerizable composition.

### <Photopolymerization initiator>

The polymerizable composition used to form the coating layer in the production method contains, as a polymerization initiator, a photopolymerization initiator having adsorption in at least a part of a visible light wavelength range (that is, a wavelength range of more than 400 nm and 780 nm or less). As such a polymerization initiator, in order to cause the polymerization reaction progress more smoothly in the initial stage of polymerization in which a ultraviolet blocking filter is used, one having a molar extinction coefficient of 160 L·mol⁻¹·cm⁻¹ or more at a wavelength of 420 nm is preferable. In addition, the molar extinction coefficient may be, for example, 5,300 L·mol⁻¹·cm⁻¹ or less. In addition, as the photopolymerization initiator, it is preferable to use a compound having adsorption in at least a part of a ultraviolet wavelength range in order to cause the polymerization reaction to progress more smoothly after the ultraviolet blocking filter is removed. The photopolymerization initiator is preferably a photoradical polymerization initiator. Examples of photoradical polymerization initiators include α-hydroxyketone, α-aminoketone, oxime ester, phosphine oxide, 2,4,5-triarylimidazole dimer, a benzophenone compound, a quinone compound, a benzoin ether, a benzoin compound, a benzyl compound, and an acridine compound. The content of the photopolymerization initiator based on a total amount of 100 mass% of the composition may be, for example, in a range of 0.1 to 5 mass%.

### <Ultraviolet absorbing compound>

The polymerizable composition used to form the coating layer in the production method contains a ultraviolet absorbing compound. Examples of ultraviolet absorbing compounds include a photochromic compound. The photochromic compound is a compound having a property of coloring under emission of light in a wavelength range for which it has photoresponsivity and fading without light emission (photochromic performance). As an example, the photochromic compound undergoes structural conversion into a colored component through an excited state when it receives light such as sunlight. The structure after structural conversion via light emission may be called a "colored component." On the other hand, the structure before light emission may be called a "colorless component." Here, regarding the colorless component, "colorless" is not limited to being completely colorless, and includes a case in which the color is lighter than that of the colored component. The absorption property of the photochromic compound is the absorption property of the colorless component. That is, the photochromic compound is a ultraviolet absorbing compound when it has adsorption at a wavelength of at least 400 nm in the structure of the colorless component. Examples of photochromic compounds include compounds having a known framework that exhibits photochromic performance such as fulgimide compounds, spirooxazine compounds, chromene compounds, and indeno-fused naphthopyran compounds. The photochromic compounds may be used alone or two or more thereof may be used in combination.

In the production method, the content of the ultraviolet absorbing compound in the polymerizable composition used to form the coating layer may be, for example, about 0.1 to 15 mass%, based on a total amount of 100 mass% of the composition, but the content is not limited to this range.

Known additives that can be generally added to the polymerizable composition, for example, additives such as a surfactant, an antioxidant, a radical scavenger, a light stabilizer, an anti-coloring agent, an antistatic agent, a fluorescent dye, a dye, a pigment, a fragrance, a plasticizer, and a silane coupling agent in an arbitrary amount can be additionally added to the polymerizable composition. Known compounds can be used as these additives.

The polymerizable composition can be prepared by simultaneously or sequentially mixing the various components described above in any order.

### [Curing treatment by light emission]

In the production method, light is emitted to the coating layer of the polymerizable composition from a light source that emits light in a wavelength range ranging from ultraviolet light to visible light, and during the light emission, for at least a certain period from the start of light emission, the light emission is performed after a ultraviolet blocking filter is disposed between the light source and the coating layer. Thereby, since it is possible to block emission of ultraviolet light to the coating layer in the initial stage of polymerization, the influence of aggregation of ultraviolet absorbing compound molecules can be eliminated or reduced, and the polymerization reaction of the low-molecular-weight polymerizable compound can progress smoothly.

### <Light source>

In the production method, a light source that emits light in a wavelength range ranging from ultraviolet light to visible light is used. As described above, such a light source is a light source having a light emission wavelength range in at least a part of a ultraviolet wavelength range and at least a part of a visible light wavelength range, and may be, for example, a light source having a light emission wavelength range in a at least a part of a wavelength range of 300 nm or more and 600 nm or less (including at least a part of a ultraviolet wavelength range and at least a part of a visible light wavelength range). Examples of such light sources include a metal halide lamp.

### <Ultraviolet blocking filter>

As described above, the ultraviolet blocking filter is a filter having a light transmittance of less than 5% in a ultraviolet wavelength range (300 nm or more and 400 nm or less) for the filter. The inventors think that blocking light in a ultraviolet wavelength range within light emitted from the light source to the coating layer in the initial stage of polymerization by the filter contributes to restricting the occurrence of defects on the surface of the cured layer formed by curing the coating layer by photopolymerization. The details of this point are as described above. As the ultraviolet light emission filter, a commercially available filter can be used as long as it has the ultraviolet light blocking property, and a filter produced by a known method can also be used. In addition, the ultraviolet light blocking property of the ultraviolet blocking filter may be due to reflection, adsorption, or both reflection and absorption. In the initial stage of polymerization, in order to allow at least some light in a visible light wavelength range within light emitted from the light source to pass through a ultraviolet blocking filter and emit it to the coating layer, it is preferable for the ultraviolet blocking filter to have a transmittance of preferably 5% or more, and more preferably 100 or more, 20% or more, 30% or more, and 40% or more in that order, for at least some light in a visible light wavelength range (that is, a wavelength range of more than 400 nm and 780 nm or less). Such a transmittance may be, for example, 100% or less, less than 1000, or 90% or less.

### <Curing treatment>

Regarding emission of light from the light source to the coating layer, for at least a certain period from the start of light emission, a ultraviolet blocking filter is disposed between the light source and the coating layer to block emission of ultraviolet light to the coating layer. During the entire period for which light is emitted from the light source to the coating layer, light emission can also be performed after the ultraviolet blocking filter is disposed between the light source and the coating layer. In order to cause the polymerization reaction of the polymerizable compound to progress more smoothly, it is preferable to dispose a ultraviolet blocking filter between the light source and the coating layer and perform light emission for a certain period from the start of light emission, then remove the ultraviolet blocking filter between the light source and the coating layer, and perform light emission without inserting the ultraviolet blocking filter between the light source and the coating layer. In this case, the time for which light is emitted from the light source to the coating layer through the ultraviolet blocking filter may be, for example, longer than 0 seconds and 5 seconds or shorter, with the start of light emission being 0 seconds, but the time is not limited thereto. The time for which light emission is performed after the ultraviolet blocking filter is removed from between the light source and the coating layer is not particularly limited.

Light emission can be performed when an emission target object (that is, a laminate including at least a substrate and a coating layer of the polymerizable composition) is disposed in a light emission device. Examples of atmospheres in the light emission device include a nitrogen atmosphere and an atmospheric atmosphere. The above nitrogen atmosphere and a nitrogen atmosphere to be described below may be, for example, a nitrogen atmosphere with an oxygen concentration of 500 ppm or less (ppm is based on volume). The atmosphere in the device can be made into a nitrogen atmosphere by purging with nitrogen. Disposition of the ultraviolet blocking filter between the light source and the coating layer and removal of the ultraviolet blocking filter may be automatically performed using a ultraviolet blocking filter moving unit provided in the light emission device or manually performed.

The thickness of the cured layer formed by the curing treatment may be determined according to the type of the cured layer. For example, when the cured layer is a layer containing a photochromic compound as a ultraviolet absorbing compound, that is, a photochromic layer, the thickness of the photochromic layer is, for example, preferably in a range of 5 to 80 um, and more preferably in a range of 20 to 60 µm.

### [Optionally provided layers]

In the method of producing an optical article, one or more layers can be additionally formed on the cured layer described above. Such layers include known layers such as functional layers for optical articles, for example, a hard coat layer, a protective layer, an antireflection layer, a water-repellent or hydrophilic anti-fouling layer, an antifogging layer, and a primer layer for improving adhesion between layers.

One aspect of the optical article is a spectacle lens. In addition, one aspect of the optical article includes, for example, a goggle lens, a visor (cap) part of a sun visor, and a shield member of a helmet. When the cured layer contains a photochromic compound as the ultraviolet absorbing compound, the optical article can be suitably used as an optical article having an anti-glare function.

When the spectacle lens is combined with a frame, eyeglasses can be produced. When such eyeglasses include, for example, a spectacle lens having a cured layer containing a photochromic compound (that is, a photochromic layer), for example, the photochromic compound contained in the photochromic layer becomes colored when exposed to sunlight outdoors, and an anti-glare effect can be exhibited like sunglasses, and when returned to indoors, the photochromic compound can fade to restore transmittance. Known techniques can be applied to the configuration of the frame and the like for the eyeglasses.

### [Examples]

Hereinafter, the present invention will be described in more detail with reference to examples. However, the present invention is not limited to the embodiments shown in the examples. Unless otherwise specified, the following processes and evaluations were performed in the air at room temperature (20°C±5°C).

### [Preparation of polymerizable composition]

### <Polymerizable composition A>

In a plastic container, 68 parts by mass of polyethylene glycol dimethacrylate (in Formula 2 shown above, n=14, R is an ethylene group, R³ and R⁴ are a methyl group, a molecular weight of 771) as a component A, 20 parts by mass of nonamethylene glycol dimethacrylate (a molecular weight of 296) as a component B, and 12 parts by mass of trimethylolpropane trimethacrylate (a molecular weight of 332) as a component C were mixed to obtain a polymerizable compound mixture.

The mixture was mixed with 0.8 parts by mass of a photoradical polymerization initiator (bis(2,4,6-trimethylbenzoyl)phenylphosphine oxide (Omnirad 819, commercially available from IGM Resin B. V.)), 1.0 part by mass of an antioxidant (ethylene bis(oxyethylene) bis-(3-(5-tert-butyl-4-hydroxy-m-tolyl)propionate)), 1.0 part by mass of a light stabilizer (a mixture of bis(1,2,2,6,6-pentamethyl-4-piperidinyl)sebacate and methyl(1,2,2,6,6-pentamethyl-4-piperidinyl)sebacate), and 3.7 parts by mass of a photochromic compound (an indeno-fused naphthopyran compound represented by the structural formula described in U.S. Patent No. 5645767) as a ultraviolet absorbing compound, and sufficiently stirred. Then, defoaming was performed with a rotation/revolution type stirring defoaming device.

Thereby, a polymerizable composition A was prepared.

### <Polymerizable composition B>

A polymerizable composition B was prepared in the same manner as in the preparation of the polymerizable composition A except that the total amount of the polymerizable compound was 100 parts by mass of nonamethylene glycol dimethacrylate (a molecular weight of 296) as the component B.

### <Polymerizable composition C>

A polymerizable composition C was prepared in the same manner as in the preparation of the polymerizable composition A except that the total amount of the polymerizable compound was 100 parts by mass of polyethylene glycol dimethacrylate (in Formula 2 shown above, n=14, R is an ethylene group, R³ and R⁴ are a methyl group, a molecular weight of 771) as the component A. The polymerizable composition C was a polymerizable composition containing no polymerizable compound having a molecular weight of 500 or less.

### [Filter]

The filter A and the filter B described below were both commercially available products (filter A: sharp cut filter L39 (a thickness of 2.5 mm) commercially available from HOYA Corporation, filter B: sharp cut filter L42 (a thickness of 2.5 mm) commercially available from HOYA Corporation). Fig. 1 shows transmission spectra of the filter A and the filter B. The transmission spectra shown in Fig. 1 were transmission spectra obtained by performing measurement using a ultraviolet-Visible/NIR Spectrophotometer (UH4150, commercially available from Hitachi High-Tech Corporation) in a wavelength range of 300 to 800 nm with a slit width of 5 nm and a scanning speed of 300 nm/min. The filter A corresponded to a ultraviolet blocking filter, and the filter B was a filter not corresponding to a ultraviolet blocking filter.

### [Photopolymerization initiator]

Fig. 2 shows an absorption spectrum of the photoradical polymerization initiator (Omnirad 819, commercially available from IGM Resin B. V.). The molar extinction coefficient at a wavelength of 420 nm was 169 L·mol⁻¹·cm⁻¹.

The absorption spectrum shown in Fig. 2 was generated as follows.

A polymerizable composition A containing no photochromic compound was put as a measurement sample into a synthetic quartz cell (optical path length of 0.05 mm), and the absorbance was measured. Measurement was performed using a ultraviolet-Visible/NIR Spectrophotometer (UH4150, commercially available from Hitachi High-Tech Corporation) in a wavelength range of 300 to 800 nm with a slit width of 5 nm and a scanning speed of 300 nm/min. The same measurement was performed on a reference sample having the same composition as the measurement sample except that no polymerization initiator was added. The value obtained by subtracting the absorbance of the reference sample from the absorbance of the measurement sample was set as the absorbance of the polymerization initiator. The molar extinction coefficient at each wavelength was calculated from the measured absorbance using the Beer-Lambert law, and the absorption spectrum shown in Fig. 2 was generated.

### [Production of spectacle lens (photochromic lens)]

### <Example 1>

A polymerizable composition A was applied onto a convex surface (object-side surface) of a plastic lens substrate (product name PHOENIX, commercially available from HOYA Corporation; a center thickness of 2.0 mm, a radius of 70 mm, S0.00) by a spin coating method to form a coating layer.

A metal halide lamp was used as the light source. The metal halide lamp had a light emission wavelength range in at least a part of a wavelength range of 300 nm or more and 600 nm or less (including at least a part of a ultraviolet wavelength range and at least a part of a visible light wavelength range).

In a light emission device, a laminate of the substrate and the coating layer, which was an emission target object, was disposed with the coating layer facing upward. Light emission was performed with the filter A disposed between the light source and the coating layer from the start of light emission (0 seconds) to 1 second. Then, the filter A was removed from between the light source and the coating layer, and light was continuously emitted from the light source.

Thereby, a spectacle lens having a photochromic layer as a cured layer on a substrate (photochromic lens) was produced.

### <Comparative Example 1>

A spectacle lens was produced in the same manner as in Example 1 except that the filter B was used in place of the filter A.

### <Comparative Example 2>

A spectacle lens was produced in the same manner as in Example 1 except that no filter A was disposed between the light source and the coating layer, and light emission was performed from the start of light emission to 1 second.

### <Comparative Example 3>

A spectacle lens was produced in the same manner as in Comparative Example 2 except that, as the polymerizable composition, the polymerizable composition B was used in place of the polymerizable composition A.

### <Example 2>

A spectacle lens was produced in the same manner as in Example 1 except that, as the polymerizable composition, the polymerizable composition B was used in place of the polymerizable composition A.

### <Reference Example 1>

A spectacle lens was produced in the same manner as in Comparative Example 2 except that, as the polymerizable composition, the polymerizable composition C was used in place of the polymerizable composition A.

### [Appearance evaluation]

The appearances of the spectacle lenses produced in the examples, comparative examples and reference example were evaluated by visual observation with the naked eye under an indoor fluorescent lamp and projection inspection using a projection inspection machine (Optical Modulex BA-H25, commercially available from Ushio Inc.). The projection inspection was performed by emitting light of 800 to 1,200 Lux from a light source when a spectacle lens was disposed between the light source of the projection inspection machine and the screen. The evaluation criteria were as follows.
Good: turbidity or shadow was not observed when evaluated under an indoor fluorescent lamp. No turbidity or shadow was observed in the projection inspection, either.
No Good: turbidity and/or shadow was observed in at least one of the evaluation under an indoor fluorescent lamp and the projection inspection.

The above results are shown in Table 1.

**[Table 1]**

| | Polymerizable composition | Filter | Appearance evaluation |
|---|---|---|---|
| Example 1 | A | A | Good |
| Comparative Example 1 | A | B | No good |
| Comparative Example 2 | A | Not used | No good |
| Comparative Example 3 | B | Not used | No good |
| Example 2 | B | A | Good |
| Reference Example 1 | C | Not used | Good |

The performance of the spectacle lens produced in Example 1 and the spectacle lens produced in Comparative Example 2 as the photochromic lens was evaluated by the following method.

### (1) Visible light transmittance without light emission

The transmittance (measurement wavelength: 550 nm) of each spectacle lens before the following coloring density was measured was measured using a spectrophotometer (commercially available from Otsuka Electronics Co., Ltd.). The larger value of the transmittance measured in this manner (hereinafter referred to as "initial transmittance") indicates better visible light transmittance without light emission.

### (2) Coloring density

The coloring density was evaluated by the following method according to JIS T 7333: 2005.

For the photochromic layers of the spectacle lenses (the cured layer obtained by curing the polymerizable composition), light was emitted to the surface of the photochromic layer through an aeromass filter using a xenon lamp for 15 minutes (900 seconds), and the photochromic compound in the photochromic layer was caused to develop a color. The transmittance (measurement wavelength: 550 nm) during color development was measured with a spectrophotometer (commercially available from Otsuka Electronics Co., Ltd.). The light emission was performed so that irradiances and tolerances of irradiances were values shown in the following Table 2, as specified in JIS T 7333: 2018.

**[Table 2]**

| Wavelength range(nm) | Irradiance (W/m²) | Tolerance of irradiance (W/m²) |
|---|---|---|
| 300∼340 | <2.5 | - |
| 340∼380 | 5.6 | ±1.5 |
| 380∼420 | 12 | ±3.0 |
| 420∼460 | 12 | ±3.0 |
| 460∼500 | 26 | ±2.6 |

The smaller value of the transmittance measured above (hereinafter referred to as a "transmittance during color development") indicates a higher density in color development of the photochromic compound.

### (3) Fading rate (half-time)

The fading rate of each spectacle lens was evaluated by the following method.

After the transmittance during color development in the above (2) was measured, the time (half-time) required from when light emission was stopped until the transmittance (measurement wavelength: 550 nm) reached [(initial transmittance-transmittance during color development)/2] was measured. A smaller value of the half-time measured in this manner indicates a faster fading rate.

The above results are shown in Table 3.

**[Table 3]**

| | Initial transmittance (%) | Transmittance during color development (%) | Half-time (seconds) |
|---|---|---|---|
| Example 1 | 84.1 | 21.1 | 62.5 |
| Comparative Example 2 | 81.7 | 21.2 | 65.3 |

Based on the results shown in Table 3, it can be confirmed that the spectacle lens produced in Example 1 exhibited the same coloring density as the spectacle lens produced in Comparative Example 2, and had better visible light transmittance without light emission and a faster fading rate than the spectacle lens produced in Comparative Example 2. The inventors thought that these results were due to the fact that, when the cured layer (photochromic layer) was formed by the method described above, aggregation of photochromic compound molecules could be inhibited and the polymerization reaction of the low-molecular-weight polymerizable compound could smoothly progress.

The film thicknesses of the photochromic layers of the spectacle lens produced in Example 1 and the spectacle lens produced in Comparative Example 2 were measured using a reflective non-contact type film thickness measurement device. The film thickness measurement results are shown in Fig. 3. For reference, the measurement result for only a substrate on which no photochromic layer was formed is also shown in Fig. 3.

As shown in Fig. 3, for the spectacle lens produced in Example 1, a signal was detected, and thus the film thickness of the photochromic layer could be measured. On the other hand, for the spectacle lens produced in Comparative Example 2, as shown in Fig. 3, no signal was detected. Therefore, for the spectacle lens of Comparative Example 2, it was difficult to measure the film thickness of the photochromic layer using a reflective non-contact type film thickness measurement device.

The above results were thought to be due to the fact that the spectacle lens produced in Example 1 had a photochromic layer with a higher surface smoothness than that of the spectacle lens produced in Comparative Example 2.

Finally, the above aspects will be summarized.
[1] A method of producing an optical article, including:
   applying a polymerizable composition onto a substrate to form a coating layer; and
   emitting light from a light source that emits light in a wavelength range ranging from ultraviolet light to visible light to the coating layer to cure the coating layer,
   wherein the polymerizable composition includes
   one or more polymerizable compounds having a molecular weight of 500 or less,
   a photopolymerization initiator having adsorption in at least a part of a visible light wavelength range, and
   a ultraviolet absorbing compound,
   wherein, during the light emission, for at least a certain period from the start of the light emission, the light emission is performed after a ultraviolet blocking filter is disposed between the light source and the coating layer.
[2] The method of producing the optical article according to [1],
   wherein the ultraviolet absorbing compound is a photochromic compound.
[3] The method of producing the optical article according to [1] or [2],
   wherein the wavelength range of the light emitted from the light source is a wavelength range of 300 nm or more and 600 nm or less.
[4] The method of producing the optical article according to any one of [1] to [3], further including
   during the light emission, after light emission with the filter disposed, removing the filter from between the light source and the coating layer, and performing light emission.
[5] The method of producing the optical article according to any one of [1] to [4],
   wherein each of the polymerizable compound having a molecular weight of 500 or less is a (meth)acrylate.
[6] The method of producing the optical article according to any one of [1] to [5],
   wherein the polymerizable composition further includes one or more polymerizable compounds having a molecular weight of more than 500.
[7] The method of producing the optical article according to any one of [1] to [6],
   wherein the optical article is a spectacle lens.
[8] The method of producing the optical article according to any one of [1] to [6],
   wherein the optical article is a goggle lens.
[9] The method of producing the optical article according to any one of [1] to [6],
   wherein the optical article is a visor part of a sun visor.
[10] The method of producing the optical article according to any one of [1] to [6],
   wherein the optical article is a shield member of a helmet.

Two or more of the various aspects and forms described in this specification may be combined in arbitrary combinations.

The embodiments disclosed herein are only examples in all respects and should not be considered as restrictive. The scope of the present invention is not limited to the above description but is limited by the scope of claims, and is intended to encompass equivalents to and all modifications within the scope of the claims.

### [Industrial Applicability]

The present invention is beneficial in the technical fields of eyeglasses, goggles, sun visors, helmets and the like.

## Claims

1. A method of producing an optical article, comprising:
applying a polymerizable composition onto a substrate to form a coating layer; and
emitting light from a light source that emits light in a wavelength range ranging from ultraviolet light to visible light to the coating layer to cure the coating layer,
wherein the polymerizable composition includes
one or more polymerizable compounds having a molecular weight of 500 or less,
a photopolymerization initiator having adsorption in at least a part of a visible light wavelength range, and
a ultraviolet absorbing compound,
wherein, during the light emission, for at least a certain period from the start of the light emission, the light emission is performed after a ultraviolet blocking filter is disposed between the light source and the coating layer.

2. The method of producing the optical article according to claim 1,
wherein the ultraviolet absorbing compound is a photochromic compound.

3. The method of producing the optical article according to claim 1 or 2,
wherein the wavelength range of the light emitted from the light source is a wavelength range of 300 nm or more and 600 nm or less.

4. The method of producing the optical article according to any one of claims 1 to 3, further comprising
during the light emission, after light emission with the filter disposed, removing the filter from between the light source and the coating layer, and performing light emission.

5. The method of producing the optical article according to any one of claims 1 to 4,
wherein each of the polymerizable compound having the molecular weight of 500 or less is a (meth)acrylate.

6. The method of producing the optical article according to any one of claims 1 to 5,
wherein the polymerizable composition further includes one or more polymerizable compounds having a molecular weight of more than 500.

7. The method of producing the optical article according to any one of claims 1 to 6,
wherein the optical article is a spectacle lens.

8. The method of producing the optical article according to any one of claims 1 to 6,
wherein the optical article is a goggle lens.

9. The method of producing the optical article according to any one of claims 1 to 6,
wherein the optical article is a visor part of a sun visor.

10. The method of producing the optical article according to any one of claims 1 to 6,
wherein the optical article is a shield member of a helmet.
